# FASCICULE DE BREVET EUROPEEN

(11) **EP 0 397 561 B1**
(45) Date de publication et mention de la délivrance du brevet: **29.09.1993**
(21) Numéro de dépôt: 90401230.9
(22) Date de dépôt: 09.05.1990
(51) Int. Cl.: F23D 14/54

(54) **Tête de coupe à jet d'oxygène**
Schneidkopf mit Sauerstoffstrahl
Cutting head with oxygen jet

(30) Priorité: 12.05.1989 FR 8906247
(43) Date de publication de la demande: 14.11.1990
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR); LA SOUDURE AUTOGENE FRANCAISE, F-75007 Paris (FR)
(72) Inventeur: Arnout, Michel, F-95130 Franconville (FR); Lasnier, Didier, F-95000 Cergy (FR); Soula, Richard, F-95000 Jouy-Le-Moutier-Cergy (FR)
(74) Mandataire: Le Moenner, Gabriel

(56) Documents cités:
- GB-A- 493 088
- GB-A- 494 218
- US-A- 1 733 698
- US-A- 3 575 354

## Description

La présente invention concerne une tête de coupe à conduit axial d'oxygène de coupe et pluralité annulaire coaxiale de conduits de mélange oxycombustible raccordés en amont à une chambre de répartition annulaire de mélange combustible. Généralement, une tête de coupe de ce genre est réalisée au moyen d'une pièce ou buse de coupe centrale à conduit axial d'oxygène de coupe, présentant sur au moins une partie de son extension longitudinale une série de nervures longitudinales, et cette pièce est montée, typiquement par un écrou, dans une jupe externe formant avec lesdites nervures ladite pluralité de conduits de mélange oxycombustible.

Une tête de coupe de ce type est connue du document US - A - 3 575 354 où la buse de coupe centrale est pourvue d'un manchon en silicone définissant la chambre de répartition.

Ces têtes de coupe connues présentent un certain nombre d'inconvénients, notamment :
. Compte-tenu de la dimension des têtes de coupe (environ 50 à 60 mm de longueur axiale), la réalisation du conduit de coupe est délicate et cela d'autant plus que ce conduit de coupe présente un convergent suivi d'un col et d'un divergent et que l'usinage d'un convergent, d'un col sonique et d'un divergent constitue un élément déterminant pour obtenir de bonnes performances.
. Les réalisations connues sont telles que l'extrémité amont de la pièce incorporant le conduit de coupe chapeaute l'extrémité de jupe, de sorte que, pour faire passer le mélange oxycombustible à la chambre intermédiaire de répartition, il est nécessaire de réaliser des perforations de liaison au travers de ce chapeau.
. Les étanchéités des pièces constitutives de la tête de chalumeau d'une part, et entre tête et corps de chalumeau d'autre part, sont difficiles à assurer car les portées d'étanchéité sont réduites à cause de l'existence d'une gorge de répartition annulaire dans la face amont d'extrémité de la pièce interne.
. Du fait de la présence d'une chambre de répartition du mélange oxycombustible annulaire entre la buse de coupe et la jupe, il est indispensable que ces têtes soient démontables, car lors du nettoyage de celles-ci après utilisation, des petites particules d'oxyde peuvent s'introduire à l'intérieur et perturber l'écoulement gazeux. D'autre part, cette conception ne favorise pas l'évacuation des calories absorbées par la tête durant la coupe.
. Le coût de ces têtes de coupe est relativement élevé en matières premières et usinages du fait de leur importance dimensionnelle et des perforations d'alimentation en mélange oxycombustible.

La présente invention vise une nouvelle conception de tête permettant de résoudre les problèmes exposés ci-dessus, tout en conservant, voire en améliorant, les performances opérationnelles et en assurant au matériel une excellente fiabilité industrielle.

Selon l'invention les nervures de la buse de coupe s'étendent vers l'amont jusqu'à une position longitudinale à faible distance de l'extrémité amont de la buse de coupe, la jupe comprend un évidement interne très légèrement inférieur à une enveloppe externe des nervures, et la buse de coupe est solidarisée avec la jupe par emmanchement à force jusqu'à ce que les faces d'extrémité amont de la buse de coupe et de la jupe soient dans un même plan transversal constituant une face transversale d'étanchéité pour l'extrémité d'un corps de chalumeau, formant ainsi entre elles une chambre annulaire transversale de répartition de mélange oxycombustible alimentant une pluralité de conduits longitudinaux de mélange oxycombustible délimités par les nervures entre la buse de coupe et la jupe.

Grâce à cette disposition de l'emmanchement à force avec positionnement en butée, il en résulte une meilleure tenue mécanique de l'assemblage, ce qui autorise la réduction dimensionnelle, notamment axiale, de la tête de coupe et assure, grâce à la continuité de contact, sur presque toute la longueur axiale, des nervures avec la jupe, des propriétés d'évacuation thermique nettement accrues.

En effet :
. La réalisation du conduit de coupe est plus aisée compte-tenu de la diminution de la dimension axiale de la tête (entre 20 et 30 mm, typiquement de l'ordre de 25 mm au lieu, habituellement, de 50 à 60 mm) ; ceci entraîne un usinage du conduit dans des conditions optimales qui assure une garantie des performances.
. On obtient une meilleure résistance à l'échauffement du fait de sa conception "monobloc" grâce à l'emmanchement à force.
. Les coûts sont moins élevés en matières et en usinage.

Selon une forme de réalisation préférentielle, les nervures présentent sur une partie restreinte de leur extension amont une dimension radiale plus importante que sur une partie principale de leur extension aval, de façon à venir en butée de positionnement contre un épaulement correspondant de la jupe.

L'invention s'applique également aux têtes de coupe dites à rideau, qui se caractérisent en ce que la buse de coupe est elle-même formée de deux pièces emmanchées à force, à savoir une pièce interne à conduit d'oxygène de coupe présentant une partie amont à épaulement externe de butée pour une seconde pièce dite à buse de rideau, ménageant dans une partie aval un faible écartement avec la paroi externe de buse de coupe pour former un conduit annulaire de rideau communiquant par perforations avec le conduit d'oxygène de coupe, ladite buse à rideau présentant à son extérieur lesdites nervures et étant elle-même engagée à force dans la jupe de buse.

Les caractéristiques et avantages de l'invention ressortiront d'ailleurs de la description qui suit, à titre d'exemple, en référence aux dessins annexés dans lesquels :
- la figure 1 est une vue en élévation, avant montage, des deux pièces constitutives d'une tête de coupe selon l'invention ;
- la figure 2 est une vue en bout selon les flèches II-II de la pièce formant buse de coupe proprement dite.
- la figure 3 est une vue en coupe axiale de la tête de coupe en position montée.
- la figure 4 est une vue analogue à la figure 3 d'une tête de coupe à rideau d'oxygène à trois pièces constitutives.

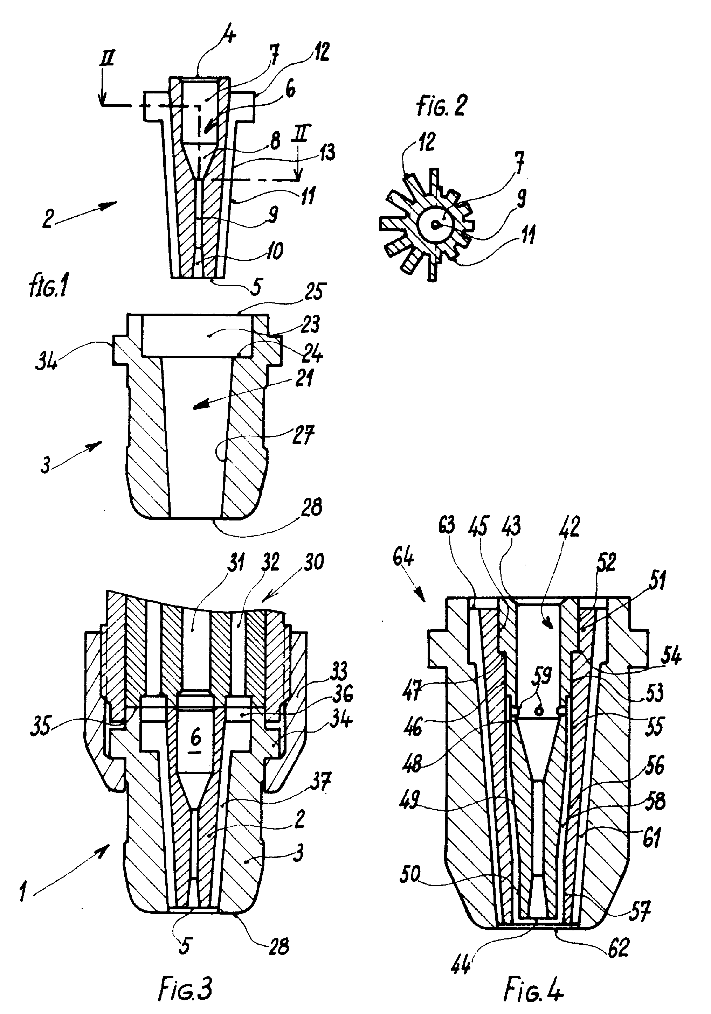

En se référant aux figures 1 à 3, une tête de coupe 1 est ici constituée de deux parties, à savoir une pièce interne formant buse de coupe 2 ou carotte, et une jupe formant buse de chauffe 3.

La buse de coupe 2 est constituée d'une pièce métallique usinée de forme générale légèrement tronconique, avec une extrémité large à l'amont 4 et une extrémité plus étroite à l'aval 5, et présentant un conduit axial 6 s'étendant de part en part de l'extrémité amont 4 à l'extrémité aval 5. Ce conduit 6 est formé à partir de l'extrémité amont 4 vers l'extrémité aval 5 par un tronçon cylindrique 7 de grand diamètre de chasse, suivi d'un fort convergent 8, d'un col sonique allongé de grande longueur 9 et d'un léger divergent 10 débouchant à l'extrémité aval 5. A la périphérie extérieure, la buse de coupe 2 présente une série de nervures radiales 11 formées par fraisage longitudinal dans la masse métallique et s'étendant jusqu'à une position légèrement en deçà de l'extrémité 4 de la buse du coupe 2 en une partie axialement restreinte et radialement cylindrique de dimension importante 12 suivie d'une partie principale tronconique d'extension radiale nettement plus petite en 13.

La jupe 3 est formée d'une pièce relativement massive avec un évidement interne 21, du côté de l'extrémité amont, reproduisant, à très faible écart et par défaut, l'enveloppe cylindrique externe des arêtes des nervures 11, à savoir un évidement cylindrique de fort diamètre en 23 et un évidement tronconique 27 s'étendant depuis un épaulement 24 jusqu'à l'extrémité aval 28, la longueur axiale de la jupe 3 étant légèrement plus grande que la longueur axiale de la buse de coupe 2. Comme indiqué, l'évidement interne 21 de la buse de chauffe 3 est très légèrement inférieur à l'enveloppe cylindrique externe des nervures de la buse de coupe 2, de façon que la buse de coupe 2 puisse être solidarisée dans la jupe 3 par emmanchement à force. Cet emmanchement à force est effectué jusqu'à ce que la partie 12 des nervures 11 vienne en une position axiale dans laquelle les faces d'extrémité amont 4, de la buse de coupe 2, et 25 de la buse de chauffe 3, soient rigoureusement dans un même plan transversal, ce qui correspond à une position de butée des nervures 12 contre l'épaulement 24. Pour obtenir une planéité rigoureuse nécessaire à l'étanchéité des faces 4 et 25 de buses de coupe et chauffe, une reprise d'usinage est réalisée.

En position montée sur le corps de chalumeau 30, qui présente un conduit axial d'oxygène de coupe 31 et des conduits de mélange oxy-combustible 32, au moyen d'un écrou 33 prenant appui sur une collerette externe 34 de la buse de chauffe 3, la face transversale d'extrémité 35 du corps de chalumeau 30 vient en appui étanche contre les faces d'extrémité 4 et 25 de la buse 1, de façon à faire communiquer le conduit axial d'oxygène de coupe 31 du corps de chalumeau 30 avec le conduit d'oxygène de coupe 6 de la buse de coupe 2, tandis que les différents conduits de mélange 32 débouchent sans une chambre de répartition annulaire 36, formée entre la buse 2, la jupe 3 et l'extrémité amont des nervures 12, qui alimente une pluralité annulaire de conduits 37 formés entre deux nervures successives 11, qui débouchent à l'extrémité aval 5 de la buse de coupe 2 située en position légèrement rentrée par rapport à l'extrémité aval 28 de la buse de chauffe 3, afin d'assurer un accrochage correct de flamme pour certains gaz, notamment les gaz GPL.

En se référant à la figure 4, une tête de coupe est ici constituée d'une buse de coupe composite formée de deux pièces : l'une est une pièce axiale centrale 42 présentant une forme extérieure de section décroissante depuis l'extrémité amont 43 jusqu'à l'extrémité aval 44, à savoir d'abord deux portées cylindirques 45 et 46 séparées par un épaulement 47, une troisième portée cylindrique 48, de diamètre légèrement plus faible que la portée cylindrique 46, suivie d'une partie tronconique 49 et finalement d'une partie cylindrique 50.

L'autre pièce est un fourreau dit buse à rideau 51 qui présente un évidement interne avec des parois 52 et 53 séparées pa un épaulement 54, coopérant à emmanchement à force avec les portées cylindriques 45 et 46 et l'épaulement 47, et une partie évidée en trois zones axialement étagées, avec une zone cylindrique 55, une zone tronconique 56 et une zone terminale cylindrique 57, de sections telles qu'en position montées des pièces 51 et 42, il se forme un espace annulaire libre 58 qui communique avec l'intérieur de la buse de coupe par des perforations 59, la zone annulaire entre (48-49-50) d'une part et (55-56-57) d'autre part formant le conduit annulaire pour la gaz de rideau.

La face externe du fourreau 51 est pourvue, comme précédemment décrit, de nervures 61 qui s'étendent longitudinalement depuis l'extrémité aval 62 du fourreau jusqu'à une faible distance, en 63, de l'extrémité amont du fourreau, l'ensemble ainsi réalisé étant emmanché à force dans une jupe 64 du type précédemment décrit.

## Revendications

1. Tête de coupe à conduit axial(6) d'oxygène de coupe et pluralité annulaire coaxiale de conduits (37) de mélange oxycombustible raccordés en amont à une chambre de répartition annulaire de mélange combustible (36), du genre comportant une pièce centrale ou buse de coupe (2 ; 42, 51) à conduit axial (6) d'oxygène de coupe, présentant sur au moins une partie de son extension longitudinale une série de nervures longitudinales (11 ; 61), la pièce centrale ( 2 ; 42, 51) étant montée dans une jupe externe (3 ; 64) formant avec les nervures ladite pluralité de conduits (37) de mélange oxycombustible, caractérisée en ce que les nervures (11 ; 61) de la buse de coupe (2 ; 42, 51) s'étendent vers l'amont jusqu'à une position longitudinale à faible distance de l'extrémité amont (4 . 43) de la buse de coupe, la jupe (3 ; 64) comprenant un évidement interne (27) de dimensions transversales très légèrement inférieures à une enveloppe externe des nervures (11), et en ce que la buse de coupe est solidarisée avec la jupe par emmanchement à force jusqu'à ce que les faces d'extrémités amont (4, 25) de la buse de coupe et de la jupe soient dans un même plan transversal constituant une face transversale d'étanchéité pour l'extrémité (35) d'un corps de chalumeau (30), l'extrémité amont des nervures (11 ; 61) définissant ainsi, entre la pièce centrale (2 ; 62 ; 51) et la jupe (3 ; 64), en amont, la chambre annulaire de répartition de mélange combustible (36) alimentant la pluralité de conduits longitudinaux de mélange combustible (37) délimités chacun par deux nervures adjacentes.

2. Tête de coupe selon la revendication 1, caractérisée en ce que les nervures (11 ; 61) présentent, sur une partie restreinte de leur extension amont (12), une dimension radiale plus important que sur une partie principale de leur extension aval, de façon à venir en butée de positionnement contre un épaulement correspondant (24) de la jupe (3 ; 64).

3. Tête de coupe selon la revendication 1 ou 2, caractérisée en ce que l'extension axiale de la tête de coupe est comprise entre 20 et 30 mm

4. Tête de coupe selon l'une des revendications 1 à 3, caractérisée en ce que la pièce centrale (42, 51) est elle-même formée de deux pièces coaxiales emmanchées mutuellement à force, à savoir une pièce interne (42) à conduit (6) d'oxygène de coupe, présentant une partie amont (43) à épaulement externe (47) de butée pour une seconde pièce tubulaire (51), s'étendant, dans une partie aval, à faible distance de la paroi externe de la pièce interne pour former un conduit annulaire communiquant par des perforations (59) avec le conduit d'oxygène de coupe, la seconde pièce (51) présentant à son extérieur les nervures (61) et étant elle-même engagée à force dans la jupe de buse (64).

## Patentansprüche

1. Schneidkopf mit axialer Schneidsauerstoffleitung (6) und mehreren koaxial ringförmig angeordneten Brennstoffgemischleitungen (37), die stromauf mit einer ringförmigen Brennstoffgemischverteilkammer (36) verbunden sind, mit einem Mittelstück oder einer Schneiddüse (2; 42, 51) mit axialer Schneidsauerstoffleitung (6), das bzw. die zumindest über einen Teil ihrer Länge mit einer Reihe von Längsrippen (11; 61) versehen ist, wobei das Mittelstück (2; 42, 51) in einem Außenmantel (3; 64) angeordnet ist, der mit den Rippen die Brennstoffgemischleitungen (37) bildet, dadurch gekennzeichnet, daß sich die Rippen (11; 61) der Schneiddüse (2; 42, 51) stromaufwärts bis zu einer Stelle erstrecken, die sich in Längsrichtung in geringem Abstand vom stromaufseitigen Ende (4; 43) der Schneiddüse befindet, wobei der Mantel (3; 64) eine Innenaussparung (27) aufweist, deren transversale Abmessungen nur geringfügig kleiner als eine äußere Einhüllende der Rippen (11) sind, und daß die Schneiddüse mit dem Mantel durch Einpressen bis sich die stromaufseitigen Stirnflächen (4, 25) der Schneiddüse und des Mantels in einer transversalen Ebene befinden, verbunden wird, welche Ebene eine transversale Dichtfläche für das Ende (35) eines Brennerkörpers (30) bildet, wobei das stromaufseitige Ende der Rippen (11; 61) auf diese Weise zwischen dem Mittelstück (2; 42, 51) und dem Mantel (3; 64) stromaufwärts die ringförmige Brennstoffgemischverteilkammer (36) bildet, die die längs verlaufenden Brennstoffgemischleitungen (37) versorgt, die jeweils durch zwei benachbarte Rippen begrenzt sind.

2. Schneidkopf nach Anspruch 1, dadurch gekennzeichnet, daß die Rippen (11; 61) an ihrer Stromaufseite über einen begrenzten Teil ihrer Länge (12) eine radiale Erstreckung haben, die größer ist als diejenige über den Hauptteil ihrer Länge an der Stromabseite, so daß sie gegen eine entsprechende Schulter (24) des Mantels (3; 64) in positionierenden Anschlag kommen.

3. Schneidkopf nach Anspruch 1 oder 2, dadurch gekennzeichnet, daß die axiale Erstreckung des Schneidkopfs 20 bis 30 mm beträgt.

4. Schneidkopf nach einem der Ansprüche 1 bis 3, dadurch gekennzeichnet, daß das Mittelstück (42, 51) seinerseits aus zwei ineinandergepreßten koaxialen Teilen besteht, nämlich einem Innenstück (42) mit Schneidsauerstoffleitung (6), das ein stromaufseitiges Stück (43) mit Außenschulter (47) als Anschlag für ein zweites rohrförmiges Stück (51) aufweist und sich in einem stromabseitigen Teil in geringem Abstand von der Außenwand des Innenstücks erstreckt, um eine ringförmige Leitung zu bilden, die über Bohrungen (59) mit der Schneidsauerstoffleitung in Verbindung steht, wobei das zweite Stück (51) außenseitig die Rippen (61) aufweist und seinerseits in den Mantel der Düse (64) eingepreßt ist.

## Claims

1. Cutting head having an axial passage (6) for cutting oxygen and a coaxial, annular plurality of passages (37) for an oxygen-combustible mixture, these passages (37) being connected upstream to an annular distribution chamber (36) for the combustible mixture, the said cutting head being of the type comprising a central piece or cutting nozzle (2; 42, 51) having an axial passage (6) for cutting oxygen, having over at least a part of its longitudinal extent a series of longitudinal ribs (11; 61), the central piece (2; 42, 51) being mounted in an outer skirt (3; 64) forming with the ribs the said plurality of passages (37) for the oxygen-combustible mixture, characterised in that the ribs (11; 61) of the cutting nozzle (2; 42, 51) extend in the upstream direction to a longitudinal position a small distance from the upstream end (4, 43) of the cutting nozzle, the skirt (3; 64) comprising an inner recess (27) of transverse dimensions very slightly smaller than an outer cover of the ribs (11), and in that the cutting nozzle and the skirt are solidly connected by being fitted together by force until the upstream end surfaces (4, 25) of the cutting nozzle and of the skirt are in a single transverse plane constituting a transverse sealing surface for the end (35) of a blowpipe body (30), the upstream end of the ribs (11; 61) thus defining, between the central piece (2; 62; 51) and the skirt (3; 64), upstream, the annular combustible mixture distribution chamber (36) supplying the plurality of longitudinal passages (37) for combustible mixture, each of these passages (37) being delimited by two adjacent ribs.

2. Cutting head according to claim 1, characterised in that the ribs (11; 61) have, over a limited part of their upstream extent (12), a larger radial dimension than over a main part of their downstream extent, so as to come to bear for positioning against a corresponding shoulder (24) of the skirt (3; 64).

3. Cutting head according to claim 1 or 2, characterised in that the axial extent of the cutting head is between 20 and 30 mm.

4. Cutting head according to one of claims 1 to 3, characterised in that the central piece (42, 51) is itself formed by two coaxial pieces fitted together by force, that is, an inner piece (42) with a passage (6) for cutting oxygen, this inner piece having an upstream part (43) with an outer abutment shoulder (47) for a second tubular piece (51), which extends, within a downstream part, a small distance from the outer wall of the inner piece to form an annular passage communicating by way of perforations (59) with the passage for cutting oxygen, the second piece (51) having the ribs (61) on the outside and itself being engaged by force in the nozzle skirt (64).
